Europäisches Patentamt

(19) European Patent Office

Office européen des brevets

(11) Veröffentlichungsnummer: **0 011 687**
**B1**

(12) EUROPÄISCHE PATENTSCHRIFT

(45) Veröffentlichungstag der Patentschrift:
28.10.81

(21) Anmeldenummer: 79103257.6

(22) Anmeldetag: 04.09.79

(51) Int. Cl.³: **C 04 B 37/02,** F 01 B 31/06,
F 28 F 9/16

(54) Verbindungselement zwischen keramischen und metallischen Bauteilen und seine Verwendung.

(30) Priorität: 29.11.78 DE 2851507

(43) Veröffentlichungstag der Anmeldung:
11.06.80 Patentblatt 80/12

(45) Bekanntmachung des Hinweises auf die Patenterteilung:
28.10.81 Patentblatt 81/43

(84) Benannte Vertragsstaaten:
AT BE CH DE FR GB IT LU NL SE

(56) Entgegenhaltungen:
AT-B-235 102
DE-A-1 671 136
DE-B-1 264 547
DE-B2-2 433 698
FR-A1-2 318 842
US-A-3 114 612
US-A-3 284 176

(73) Patentinhaber: Rosenthal Technik AG, Postfach 1508,
D-8672 Selb/Bayern (DE)
Patentinhaber: A.G. Kühnle, Kopp & Kausch,
Postfach 265, D-6170 Frankenthal/Pfalz (DE)

(72) Erfinder: Maier, Horst R., Dr., Marienstrasse 9,
D-8672 Selb/Bayern (DE)
Erfinder: Krauth, Axel, Dr., Georg Ritter Strasse 1,
D-8672 Selb/Bayern (DE)
Erfinder: Pohlmann, Hans-Jürgen, Dr., Häuselohweg 64,
D-8672 Selb/Bayern (DE)
Erfinder: Nink, Horst, Josefstrasse 8, D-8672 Selb/Bayern
(DE)
Erfinder: Brobeck, Helmut, Ing. (grad.),
Flomersheimerstrasse 15, D-6711 Hessheim (DE)
Erfinder: Cropp, Ingo, Dipl.-Ing., Hans-Fay-Strasse 3,
D-6710 Frankenthal (DE)
Erfinder: Bergmeier, Dieter, Ing. (grad.),
Leimerstrasse 18, D-6900 Heidelberg (DE)

ACTORUM AG.

Verbindungselement zwischen keramischen und metallischen Bauteilen und seine Verwendung

Die Erfindung betrifft ein Verbindungselement zwischen keramischen und metallischen Bauteilen mit unterschiedlichen thermischen und elastischen Eigenschaften, das durch ein thermisches, mechanisches oder keramisches Verfahren auf diese aufgebracht ist und dort insbesondere eingesetzt wird, wo hohe Temperaturen, aggressive Medien und starke mechanische Belastungen auftreten.

Für den Einsatz von keramischen Bauteilen ist oft die Verbindung mit Metallen notwendig. Sie kann über eine metallische Bindung wie Löten, Schweissen etc. erfolgen oder mechanisch über alle möglichen Arten von Verklammerungen wie z.B. durch Keile und Federn. Die Anforderung, die von der Praxis her an diese Verbindungen gestellt werden, ist eine hohe Betriebssicherheit, aber insbesondere bei hohen Temperaturen treten hier Probleme auf. Bisher hat man versucht, die genannten Bedingungen durch Anwendung geeigneter Metallisierungs- und Lötverfahren einerseits und durch werkstoffgerechte Konstruktionen anderseits zu erfüllen. Die so hergestellten Metall-Keramikverbindungen genügen aber nicht mehr den steigenden Ansprüchen, die insbesondere auf höhere Betriebstemperaturen, geringeren Verschleiss und erhöhte Lebensdauer der Bauteile gerichtet sind.

In jüngerer Zeit wurde deshalb versucht, gänzlich neue Wege einzuschlagen. So ist aus der US-A 3 148 981 bekannt, einen Formkörper zu verwenden, der aus Schichten unterschiedlicher Zusammensetzungen aufgebaut ist und in Richtung auf das zu verbindende Metallteil hin einen zunehmenden Gehalt an Metall aufweist. Bei solchen Verbundwerkstoffen tritt aber stets das Problem der Unverträglichkeit bestimmter Werkstoffeigenschaften beim scharfen Übergang von der einen zu der anderen Substanz auf. Dies gilt besonders, wenn das Wärmeausdehnungsverhalten von Metallen und Keramiken sehr unterschiedlich ist.

Die bisher beschriebenen Lösungen, wie Metallisieren oder die Verwendung von sogenannten Cermets — metallische Werkstoffe mit keramischer Matrix oder umgekehrt — genügen bei bestimmten Anwendungen nicht, da die relativ dünne Verbindungszone zwischen Metall und Keramik weder eine hemmende Wirkung auf den Wärmeübergang bewirkt noch eine Nachgiebigkeit aufweist, wenn grössere Ausdehnungsunterschiede zwischen den beiden Bauteilen vorliegen. Dabei bewirken auch unterschiedliche thermische und elastische Dehnungen zwischen benachbarten Bauteilen je nach Betriebszustand Lockerungseffekte bzw. Überbeanspruchungen. Der Zweck der Erfindung ist deshalb darin zu sehen, ein Verbindungselement zu finden, das sowohl den Wärmeübergang zwischen den verschiedenen Bauteilen reduziert als auch eine Nachgiebigkeit aufweist, um mechanische Spannungen aufzunehmen.

Es ist daher Aufgabe der vorliegenden Erfindung, ein einfaches Verbindungselement und eine Verbindungsart für insbesondere hochtemperaturbeaufschlagte Bauteile zu finden, womit die thermisch und mechanisch induzierten Dehnungsunterschiede zwischen den zu verbindenden Bauteilen ausgeglichen werden und die Kontaktspannung im Betriebszustand begrenzt wird.

Diese Aufgabe wird bei einem Verbindungselement zwischen keramischen und metallischen Bauteilen dadurch gelöst, dass das Verbindungselement ein elastischer keramischer Isolations-Federkörper in Form einer Hülse bzw. Buchse ohne plastische Verformbarkeit ist, der je nach Temperaturunterschieden zwischen Keramik- und Metallbauteil von 100 bis 1500 °C eine Wärmeleitfähigkeit von 0,02 bis 0,25 W/cmK und einen E-Modul von 5000 bis 150 000 N/mm² aufweist und der in jedem Betriebszustand eine elastische Verbindung zwischen den Bauteilen aufrechterhält.

Eine Ausgestaltung des Erfindungsgedankens besteht darin, dass die Oberfläche des Isolations-Federkörpers glatt, aufgerauht, profiliert oder geschlitzt ist.

Die Erfindung besteht auch darin, dass bei einem Verbindungselement der eingangs genannten Art vorzugsweise als Werkstoff Aluminiumtitanat, Cordierit oder Siliziumnitrid verwendet wird.

Weitere Merkmale und Anwendungsmöglichkeiten der Erfindung ergeben sich aus den Ausführungsbeispielen sowie der folgenden Beschreibung. Es zeigt:

Fig. 1a–1e Schnitt durch die Verbindungsstelle zwischen Keramik-/Metallteil und dem Verbindungselement in verschiedenen Ausführungsformen.

Fig. 2 Querschnittsansicht durch eine Ausführungsform bei einem Turbolader.

Fig. 3 Schnittansicht von einer keramischen Kolbenmulde und einem Zylinderkopf mit einem Isolations-Federkörper bei einem Dieselmotor.

Fig. 4 Schnittansicht des Isolations-Federkörpers zwischen keramischem Kolbenboden und Zylinderkopf bei einem Ottomotor.

Fig. 5 Schnitt durch eine keramische Ventilführung.

Fig. 6 Querschnittsansicht eines Isolations-Federkörpers zwischen keramischen Wärmeaustauscher-Rohren und metallischen Anschlüssen bei einem Stirling-Motor.

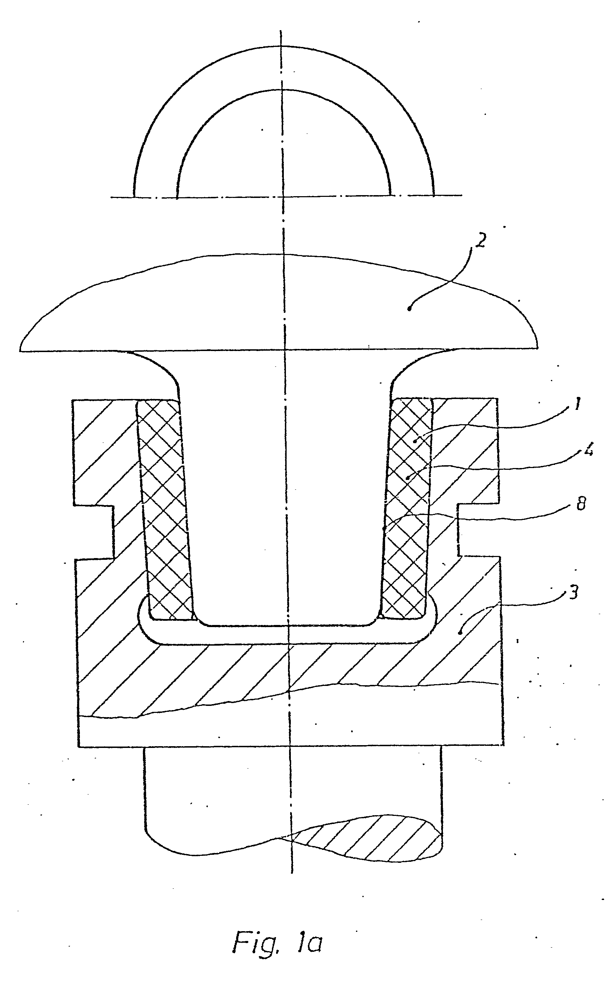

Die Ausführungsform des Isolations-Federkörpers 1 als ringförmige Hülse 4 oder Buchse 5 geht aus der Fig. 1a–1e hervor. Bevorzugte Werkstoffe für den Isolations-Federkörper 1 sind Aluminiumtitanat, Cordierit und Siliziumnitrid, deren spezielle Eigenschaften aus der Tabelle 1 hervorgehen. Von den angeführten Werkstoffeigenschaften für den Isolations-Federkörper ist insbesondere die Wärmeleitfähigkeit von 0,02 bis 0,25 W/cmK und der E-Modul von 5000 bis

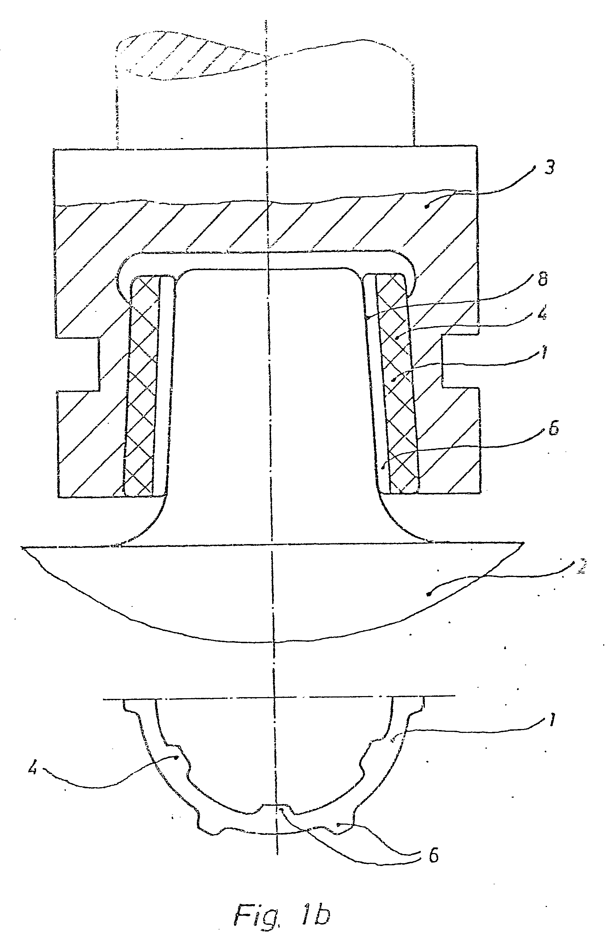

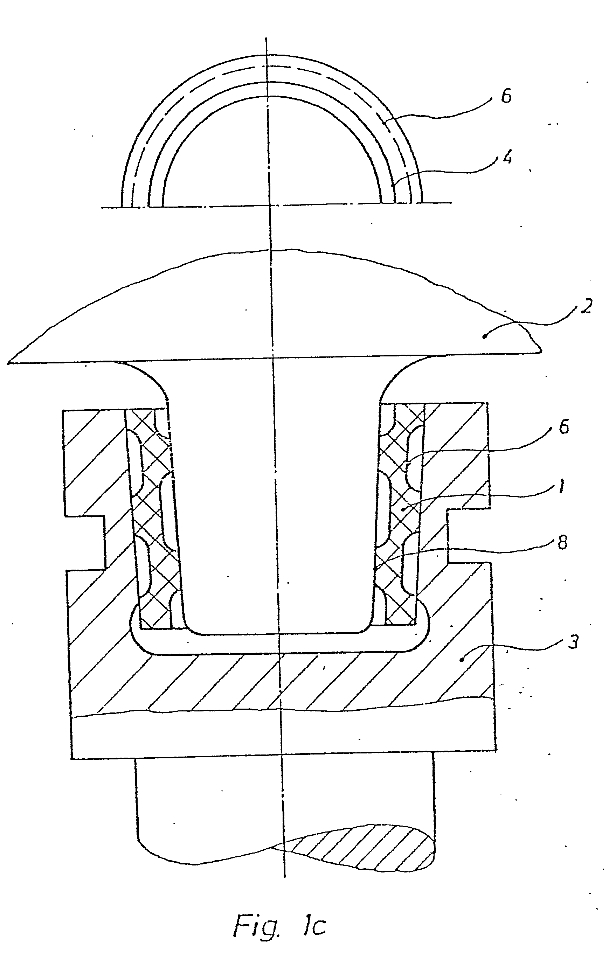

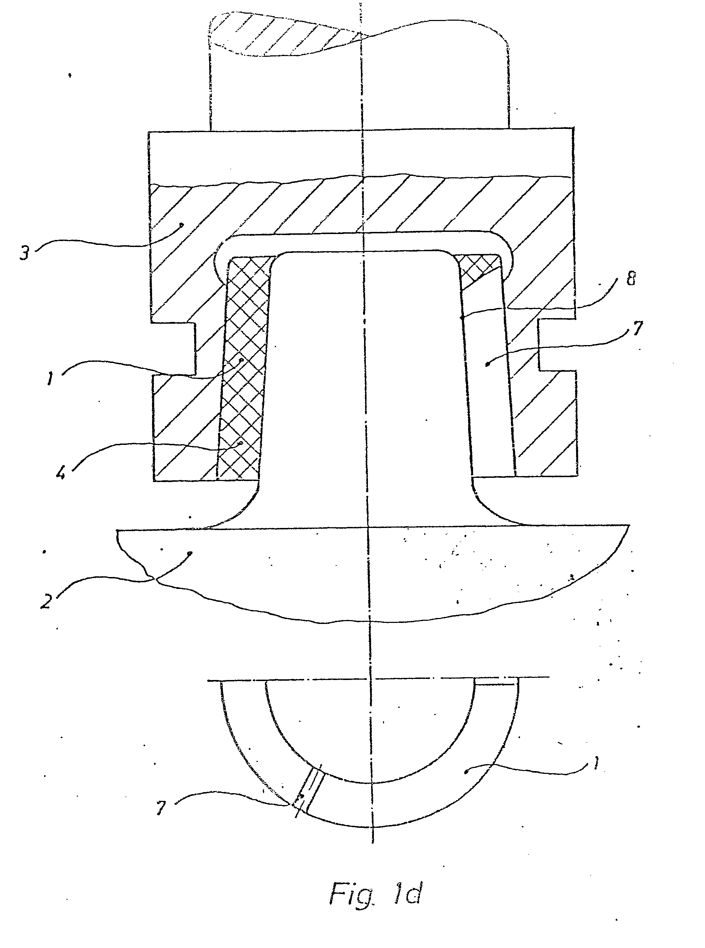

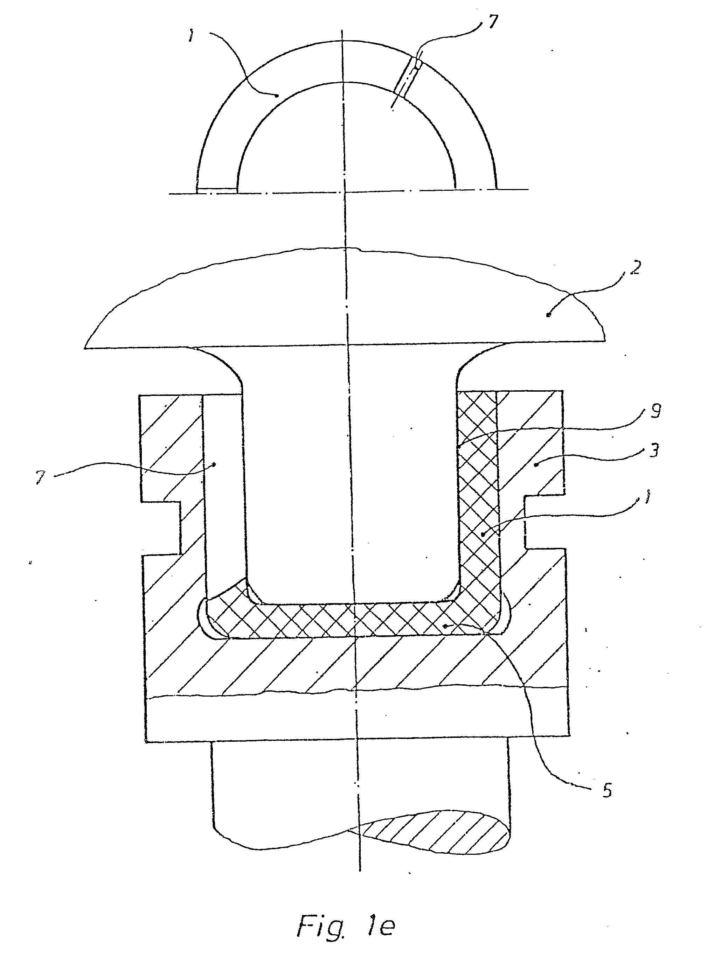

150 000 N/mm$^2$ für die Funktionsfähigkeit der Verbindung wichtig. Ebenfalls sollte keine plastische Verformbarkeit vorliegen. Auch der Wärmeausdehnungskoeffizient spielt bei extremen Unterschieden, besonders bei unterschiedlichen Temperaturen, eine Rolle. Das wesentliche Merkmal des keramischen Isolations-Federkörpers 1 ist aber in seinen elastischen Eigenschaften und in seiner Wärmeisolierung gegenüber den anderen Bauteilen 2, 3 zu sehen. Um die Federeigenschaften noch zu erhöhen, sind in einer bevorzugten Ausführungsform Schlitze 7 in den Isolations-Federkörper 1 angebracht, wie aus den Fig. 1d und 1e hervorgeht. Anderseits kann man die Verbindungskräfte zwischen den einzelnen Bauteilen noch anpassen, indem man die Oberfläche des Isolations-Federkörpers aufrauht bzw. profiliert 6, wie aus den Fig. 1b und 1c hervorgeht. Eine andere Massnahme für einen festen Sitz auf dem Bauteil besteht darin, dass anstelle einer zylinderförmigen Verbindung 9 eine konusförmige Verbindung 8 geschaffen wird. Mit all diesen Massnahmen wird eine spannungsarme und daher auch betriebssichere Verbindung von Metall und Keramik erzielt.

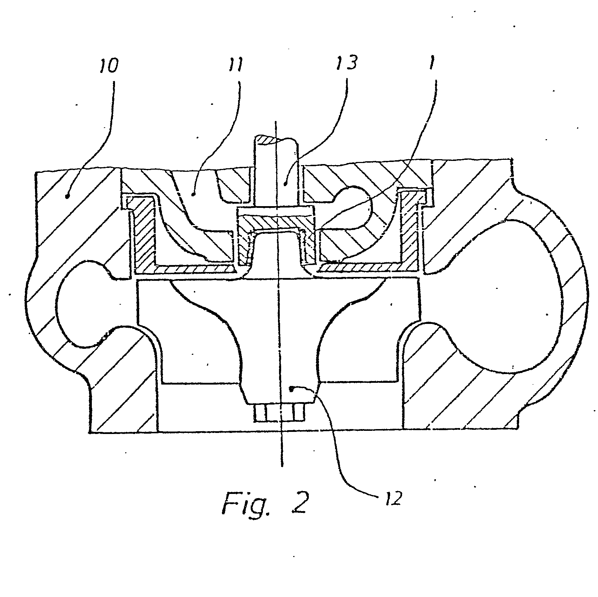

Ein anschauliches Beispiel, wie wichtig der erfindungsgemässe Isolations-Federkörper 1 ist, ergibt sich bei der Anwendung in Verbrennungsmotoren, wo es zukünftig darum geht, Metallegierungen durch Keramik zu ersetzen, um höhere Wirkungsgrade zu erzielen und Energie einzusparen als auch die Umweltbelastung herabzusetzen. In Fig. 2 ist der keramische Isolations-Federkörper 1 zwischen Keramikrotor 12 und Metallwelle 13 bei einem Abgasturbolader 10 eingebaut. Es treten hier hohe Fliehkräfte und Dehnungsunterschiede auf, wodurch leicht Lockerungen oder Unwuchtverlagerungen auftreten können. Als keramische Werkstoffe für den Rotor 12 können beispielsweise reaktionsgebundenes Siliziumnitrid sowie infiltriertes oder gesintertes Siliziumcarbid verwendet werden. Für die Welle 13 eignen sich besonders Chrom-Nickelstähle. Die charakteristischen Werkstoffdaten sind ebenfalls in der Tabelle 1 zusammengefasst. Bei diesem Anwendungsbeispiel treten z.B. für den Rotor 12 Temperaturen zwischen 800 und 1100°C auf und im Lagerbereich der Welle liegen die Temperaturen bei ca. 150°C. Dabei hat sich bei Versuchen herausgestellt, dass eine Schrumpfverbindung zwischen Stahlwelle 13 und Keramik 12 z.B. aus reaktionsgebundenem Siliziumnitrid bei einer Abkühlung von 400°C auf Raumtemperatur kritisch wird. Bei Verwendung eines glatten Isolations-Federkörpers 1 aus Aluminiumtitanat mit einer mittleren Rauhtiefe von ca. 1 μm wird aber bereits ein weit besserer Einsatzbereich von über 800°C erreicht. Weiterhin trat weder ein Bruch noch eine Lockerung der Keramik-Metallverbindung bei einer Abkühlung der gleichmässig durchwärmenden Verbindung von 800°C auf −160°C ein. Ebenfalls konnte die Temperatur der Metallwelle 13 um ca. 100°C durch den keramischen Isolations-Federkörper 1 bei Anwendungstemperaturen von 800°C gesenkt werden.

Gleichzeitig wurde die Lockerungstemperatur der gleichmässig durchwärmten Verbindung um ca. 400°C erhöht. Somit wird bei Verwendung des Isolations-Federkörpers 1 nicht nur das Verbindungsproblem zwischen Keramik- 2 und Metallbauteilen 3 gelöst, sondern auch das Lager weniger erwärmt, so dass die Kühlkanäle 11 verkleinert werden können. Diese Verbindungstechnik hat auch noch weitere Vorteile gegenüber der reinen Metallversion, indem die Fliehkraftspannungen um 60% reduziert werden; ebenfalls die Massenträgheitsmomente, da Keramik spezifisch leichter als Metall ist. Weiterhin werden höhere Festigkeiten und Oxidationsbeständigkeit als auch Korrosionsbeständigkeit bei Temperaturen bis 1500°C erzielt und ausserdem können hochwertige Metallegierungen durch kostengünstige Keramiken ersetzt werden. Dies ist nur ein Beispiel aus vielen anderen Anwendungsfällen wo z.B. Schwungräder oder andere Rotoren mit und ohne Bohrungen, Lüfterflügel mit rotierenden Wellen zu verbinden sind.

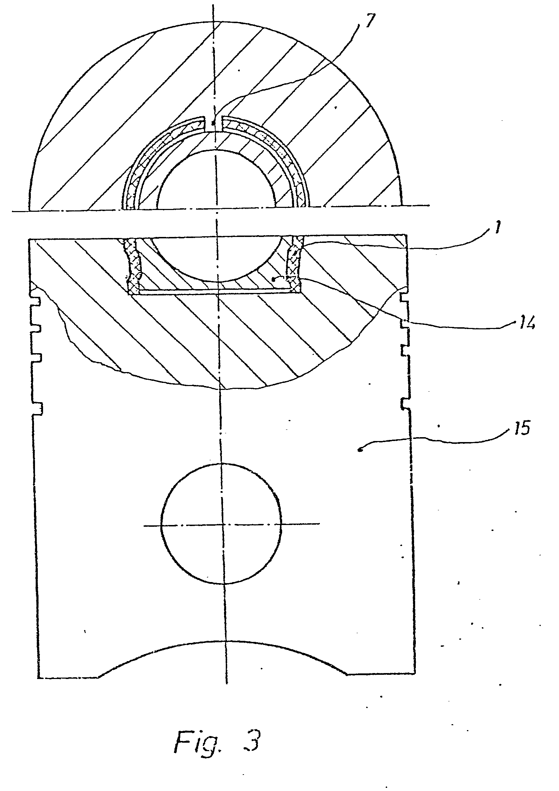

Weitere Anwendungsbeispiele, und zwar für Verbrennungsmotoren ergeben sich aus den Fig. 3 bis 5. Die zukünftige Verbrennungsmotorenentwicklung wird immer mehr Keramik verwenden, so z.B. in den Vorbrennkammern, Wirbelbrennkammern, Kolbenmulden 14 bzw. Kolbenböden. Das Problem besteht aber auch hier in einer zuverlässigen Verbindung zwischen Keramik und Metallbauteilen. Fertigungstechnisch bietet sich dabei die Eingusstechnik an, weil sie die Keramikbauteile unter Druckspannung setzt. Sie verursacht auch keine zusätzlichen Kosten. Dabei muss das Keramikbauteil 2 einerseits der Temperaturschockbeanspruchung beim Eingiessvorgang in Aluminium oder Grauguss widerstehen und anderseits darf in keinem Betriebszustand eine Lockerung oder Überbeanspruchung an der Verbindungsstelle auftreten. Aluminiumtitanat hat sich als Eingiesskeramik gut bewährt, doch widersteht sie nicht in allen Fällen der wechselseitigen Beanspruchung durch Erosion, Korrosion und Gasdruck. Hierzu sind heissgepresstes und reaktionsgebundenes Siliziumnitrid wie auch Siliziumcarbid besser geeignet. Diese weisen zwar eine geringere Thermoschockbeständigkeit, eine geringere elastische Nachgiebigkeit und eine höhere Wärmeleitfähigkeit auf, aber man erhält durch die partielle Wärmeisolation der Verbrennungsräume Vorteile bezüglich der Laufruhe, des Kaltstartverhaltens, des Wirkungsgrades, des Brennstoffverbrauches, der Abgasqualität als auch der Kühlleistung. Durch den Einsatz des erdindungsgemässen Isolations-Federkörpers 1 wird auch in diesem Anwendungsbereich eine zuverlässige Verbindung zwischen Keramik 2 und Metallbauteil 3 und die erforderliche Wärmeisolation geschaffen. Im einzelnen zeigt die Fig. 3 eine keramische Kolbenmulde 14 für einen Dieselmotor. Die eigentliche Kolbenmulde 14 besteht aus Siliziumnitrid oder Siliziumcarbid. Der Isolations-Federkörper 1 weist zur Kolbenmulde 14 und zum Kolben 15 einen Formschluss auf. Die Wandstärke des Iso-

lations-Federkörpers 1 liegt zwischen 2 bis 5 mm. Des weiteren ist der Isolations-Federkörper zur Montage geschlitzt 7 und wird über keramische Kleber zum Eingiessen mit der Kolbenmulde verbunden. Dabei wird die Einheit Kolbenmulde/Isolations-Federkörper als Kern in den Kolben 15 eingegossen und bewirkt somit einen elastischen Verbund.

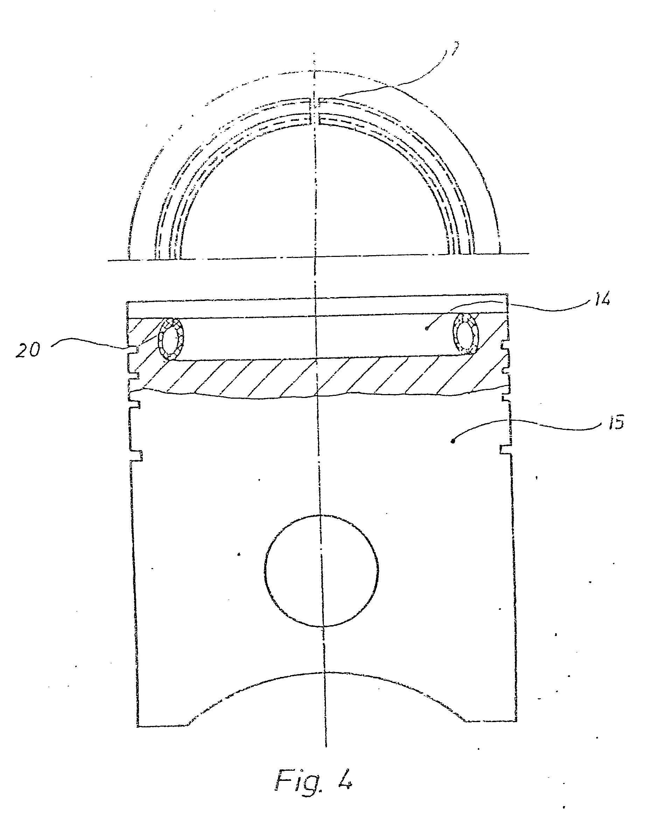

Ebenfalls kann zwischen einem keramischen Kolbenboden 14 und dem Zylinderkopf 15 bei einem Ottomotor der Isolations-Federkörper 1 eingesetzt werden, wie aus Fig. 4 hervorgeht. Der Isolations-Federkörper 1 weist dabei ein Hohlprofil 20 auf, wodurch die elastische Nachgiebigkeit noch erhöht wird.

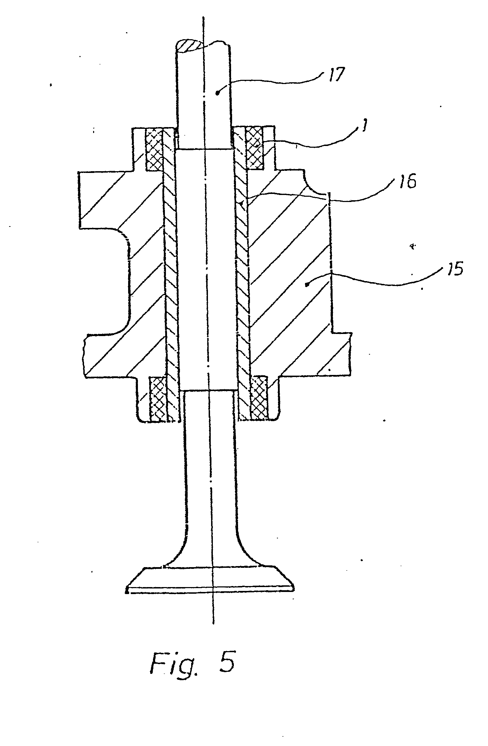

Verwendbar ist der Isolations-Federkörper 1 auch bei einer keramischen Ventilführung, wie in Fig. 5 dargestellt ist. In diesem Fall bewegt sich der Ventilschaft 17 in einer keramischen Führungshülse 16, die an dem Zylinderkopf 15 über einen Isolations-Federkörper 1 verbunden ist. In diesem Fall stehen die mechanischen Verschleisseigenschaften der Keramik im Vordergrund. Hierzu eignen sich auch wegen der hohen Wärmeleitfähigkeit und Temperaturschockbeständigkeit insbesondere infiltriertes Siliziumcarbid. In diesem Anwendungsfall übernimmt der Isolations-Federkörper 1 im wesentlichen die Funktion der elastischen Nachgiebigkeit gegenüber Lockerungen bei Betriebstemperaturen.

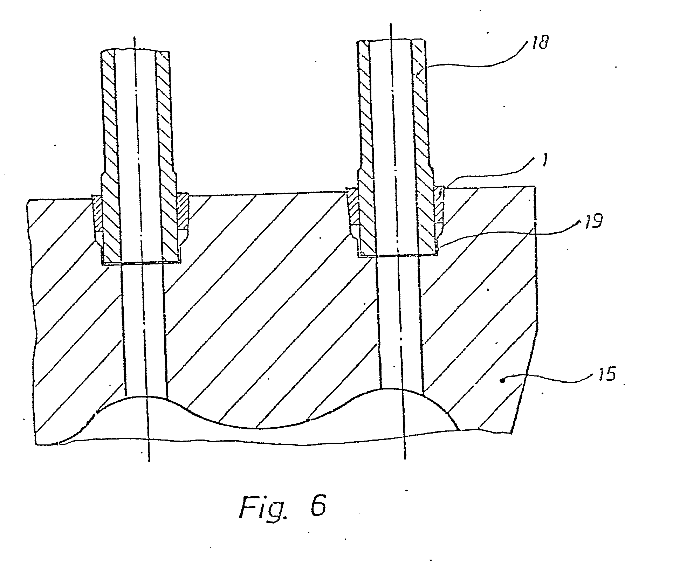

Ein weiteres Anwendungsbeispiel ergibt sich aus Fig. 6. Um die Leistungsfähigkeit z.B. eines Stirlingmotors zu erhöhen, ist es sinnvoll, einen keramischen Wärmetauscher einzusetzen. Das Problem besteht darin, einen vakuumdichten elastischen Anschluss 19 zwischen metallischem Zylinderkopf 15 und keramischen Wärmetauscherrohren 18 zu erzielen. Aufgrund der hohen Innendrücke kommt für die Keramikrohre Siliziumcarbid, insbesondere infiltriertes SiC, in Betracht. Eine Dichtlötung zwischen Keramik und Metall bei 1200 °C führt aber aufgrund zu hoher Schrumpfspannungen zur Zerstörung des Keramikrohres 18. Dieses Problem wird dadurch gelöst, dass der Bereich der Lötstelle axial begrenzt wird und die elastische Verbindung über den Isolations-Federkörper 1 erfolgt.

Die wesentlichen technischen und wirtschaftlichen Vorteile des keramischen Isolations-Federkörpers sind in einer Funktionsverbesserung, einer schnellen und kostensparenden Montage als auch in einer sicheren und festen Verbindung von Maschinenteilen zu sehen. Ferner ist eine einfache Konstruktion der Anschlussteile als auch ein Ausgleich unterschiedlicher mechanischer und thermischer Dehnungen zwischen den Maschinenelementen aus verschiedenen Werkstoffen gegeben. Auch eine elastische Lagerung bei Wellen ist bei hohen Temperaturen möglich. Ferner ergibt sich durch die elastische Nachgiebigkeit ein grosses Toleranzfeld an den zu verbindenden Teilen. Durch die Kombination von Werkstoffen über den Isolations-Federkörper können die Vorteile der Keramik bezüglich Wärmeisolation und Beständigkeit gegenüber Temperatur, Korrosion, Erosion, Oxidation und aggressiven Medien erst ausgeschöpft werden.

Tabelle 1

Kenngrössen ausgewählter Werkstoffe für Verbindungen von Bauteilen aus Keramik und Metallen

| Eigenschaften | Dim. | Keramische Bauteile | | | Isolations-Federkörper | | | Metallbauteil |
| | | 1) $Si_3N_4$ | 2) $Al_2O_3$ | 3) $SiC + Si$ | 4) $Si_3N_4$ | 5) $2MgO \cdot 2Al_2O_3 \cdot 5SiO_2$ | 6) $Al_2TiO_5$ | 7) Stahl |
|---|---|---|---|---|---|---|---|---|
| Dichte | g/cm$^3$ | 3,18 | 3,95 | 3,0 | 2,2–2,5 | 1,7–2,1 | 3,0 | 7,9 |
| Biegefestigkeit | N/mm$^2$ | 700 | 450 | 360 | 170–215 | 20–110 | 10–60 | 870 |
| E-Modul | 10$^3$N/mm$^2$ | 310 | 400 | 170–400 | 90–150 | 20–70 | 5–60 | 210 |
| Ausdehnungskoeffizient | 293–1273 K 10$^6$/K | 3,5 | 8,0 | 4,6 | 2,9 | 1,5–3,5 | 0,5–6 | 10,6 |
| Wärmeleitfähigkeit | W/cm K | 0,30 | 0,27 | 0,42 | 0,19–0,25 | 0,03–0,1 | 0,02–0,05 | 0,21 |

1) Heissgepresstes Siliziumnitrid     5) Cordierit
2) Aluminiumoxid     6) Aluminiumtitanat
3) Mit Silizium infiltriertes Siliziumcarbid   7) Chrom-Nickel-Stahl
4) Reaktionsgebundenes Siliziumnitrid

## Patentansprüche

1. Verbindungselement zwischen keramischen und metallischen Bauteilen mit unterschiedlichen thermischen und elastischen Eigenschaften, das durch ein thermisches, mechanisches oder keramisches Verfahren auf diese aufgebracht und insbesondere für Hochtemperaturbeanspruchung geeignet ist, dadurch gekennzeichnet, dass das Verbindungselement ein elastischer keramischer Isolations-Federkörper (1) in Form einer Hülse (4) bzw. Buchse (5) ohne plastische Verformbarkeit ist, der je nach Temperaturunterschieden zwischen Keramik- (2) und Metallbauteil (3) von 100 bis 1500°C eine Wärmeleitfähigkeit von 0,02 bis 0,25 W/cmK und einen E-Modul von 5000 bis 150 000 N/mm² aufweist und der in jedem Betriebszustand eine elastische Verbindung zwischen den Bauteilen aufrechterhält.

2. Verbindungselement nach Anspruch 1, dadurch gekennzeichnet, dass der Isolations-Federkörper (1) glatte Oberflächen aufweist.

3. Verbindungselement nach Anspruch 1, dadurch gekennzeichnet, dass der Isolations-Federkörper (1) aufgerauhte Oberflächen aufweist.

4. Verbindungselement nach Anspruch 1, dadurch gekennzeichnet, dass der Isolations-Federkörper (1) profilierte Oberflächen (6) aufweist.

5. Verbindungselement nach Anspruch 1, dadurch gekennzeichnet, dass der Isolations-Federkörper (1) geschlitzt (7) ist.

6. Verbindungselement nach Anspruch 1, dadurch gekennzeichnet, dass der Isolations-Federkörper aus Aluminiumtitanat besteht.

7. Verbindungselement nach Anspruch 1, dadurch gekennzeichnet, dass der Isolations-Federkörper aus Siliziumnitrid besteht.

8. Verbindungselement nach Anspruch 1, dadurch gekennzeichnet, dass der Isolations-Federkörper aus Cordierit besteht.

9. Verwendung des Verbindungselementes nach Ansprüchen 1–4, dadurch gekennzeichnet, dass sich bei Gasturbinen der Isolations-Federkörper (1) zwischen einer Metallwelle (13) und einem Keramikrotor (12) befindet.

10. Verwendung des Verbindungselementes nach Ansprüchen 1–5, dadurch gekennzeichnet, dass sich bei Kolbenmotoren der Isolations-Federkörper (1) zwischen einer keramischen Kolbenmulde bzw. einem keramischen Kolbenboden (14) und einem metallischen Zylinderkopf (15) befindet.

11. Verwendung des Verbindungselementes nach Ansprüchen 1–5, dadurch gekennzeichnet, dass sich der Isolations-Federkörper (1) zwischen keramischen Wärmetauscher-Rohren (18) und einem metallischen Zylinderkopf (15) befindet.

## Claims

1. Connection element between ceramic and metallic components with different thermal and elastic properties, which is applied to these by a thermal, mechanical or ceramic process and is suitable especially for high-temperature stressing, characterised in that the connection element ist an elastic ceramic insulation spring body (1) in the form of a sleeve (4) or bush (5) without plastic deformability, which according to temperature differences between ceramic component (2) and metal component (3) of 100 to 1500°C has a thermal conductivity of 0.02 to 0.25 W/cmK and a modulus of elasticity of 5000 to 150 000 N/mm² and which in every operational condition maintains an elastic connection between the components.

2. Connection element according to Claim 1, characterised in that the insulation spring body (1) has smooth surfaces.

3. Connection element according to Claim 1, characterised in that the insulation spring body (1) has roughened surfaces.

4. Connection element according to Claim 1, characterised in that the insulation spring body (1) has profiled surfaces.

5. Connection element according to Claim 1, characterised in that the insulation spring body (1) is slotted.

6. Connection element according to Claim 1, characterised in that the insulation spring body consists of aluminium titanate.

7. Connection element according to Claim 1, characterised in that the insulation spring body consists of silicon nitride.

8. Connection element according to Claim 1, characterised in that the insulation spring body consists of cordierite.

9. Use of the connection element according to Claims 1–4, characterised in that in the case of gas turbines the insulation spring body (1) is situated between a metal shaft (13) and a ceramic rotor (12).

10. Use of the connection element according to Claims 1–5, characterised in that in the case of piston engines the insulation spring body (1) is situated between a ceramic piston hollow or a ceramic piston crown (14) and a metallic cylinder head (15).

11. Use of the connection element according to Claims 1–5, characterised in that the insulation spring body (1) is situated between ceramic heat exchanger pipes (18) and a metallic cylinder head (15).

## Revendications

1. Elément de liaison entre des pièces de construction céramiques et métalliques possédant des propriétés thermiques et élastiques différentes, qui est appliqué sur ces dernières par une technique thermique, mécanique ou céramique et convient en particulier pour les contraintes à haute température, caractérisé en ce que l'élément de liaison est un corps isolant céramique élastique faisant ressort (1) sous forme d'un manchon (4) ou d'une douille (5), inapte aux déformations plastiques et qui, selon des différences de température entre la pièce de construction céramique (2) et la pièce de construction métallique (3) allant de 100 à 1500°C, présente une conductivité calorifique de 0,02 à 0,25 W/cmK et un module d'élasticité de 5000 à 150 000 N/mm² et qui maintient une liaison élastique entre les pièces de construction dans tous les états de fonctionnement.

2. Elément de liaison selon la revendication 1, caractérisé en ce que le corps isolant faisant ressort (1) présente des surfaces lisses.

3. Elément de liaison selon la revendication 1, caractérisé en ce que le corps isolant faisant ressort (1) présente des surfaces dépolies.

4. Elément de liaison selon la revendication 1, caractérisé en ce que le corps isolant faisant ressort (1) présente des surfaces profilées (6).

5. Elément de liaison selon la revendication 1, caractérisé en ce que le corps isolant faisant ressort (1) porte des fentes (7).

6. Elément de liaison selon la revendication 1, caractérisé en ce que le corps isolant faisant ressort consiste en titanate d'aluminium.

7. Elément de liaison selon la revendication 1, caractérisé en ce que le corps faisant ressort consiste en nitrure de silicium.

8. Elément de liaison selon la revendication 1, caractérisé en ce que le corps isolant faisant ressort consiste en coridiérite.

9. Utilisation de l'élément de liaison selon l'une des revendications 1 à 4, caractérisée en ce que, dans les turbines à gaz, le corps isolant faisant ressort (1) se trouve entre un arbre métallique (13) et un rotor céramique (12).

10. Utilisation de l'élément de liaison selon l'une des revendications 1 à 5, caractérisée en ce que, dans les moteurs à piston, le corps isolant faisant ressort (1) se trouve entre un carter de piston céramique ou une tête de piston céramique (14) et une tête de cylindre métallique (15).

11. Utilisation de l'élément de liaison selon l'une des revendications 1 à 5, caractérisée en ce que le corps isolant faisant ressort (1) se trouve entre des tubes échangeurs de chaleur céramiques (18) et une tête de cylindre métallique (15).

Fig. 1a

Fig. 1b

Fig. 1c

Fig. 1d

Fig. 1e

Fig. 2

Fig. 3

Fig. 4

Fig. 5

Fig. 6